# EUROPEAN PATENT APPLICATION

(11) **EP 2 272 808 A1**
(43) Date of publication of application: **12.01.2011**
(21) Application number: 10166835.8
(22) Date of filing: 22.06.2010
(51) Int. Cl.: C03B 37/05, C03B 37/07

(54) **Method and arrangement for optimising feeding of binder in a fiberising apparatus forming mineral fibres and a software product**

(30) Priority: 24.06.2009 FI 20095706
(71) Applicant: Paroc Oy Ab, 01300 Vantaa (FI)
(72) Inventor: Lindgren, Tommy, 20540, Turku (FI); Walli, Bjarne, 21600, Parainen (FI); Åstrand, Erik, 21600, Parainen (FI)
(74) Representative: Maskula, Silla Marjatta

(57) **Abstract**

The invention relates to a method and an arrangement for optimising feeding of binder in a fiberising apparatus forming mineral fibres. In the method mineral melt is fed to a fiberising apparatus, which comprises several fiberising rotors forming mineral fibres and rotating around a horizontal or nearly horizontal axis, and mineral fibres are formed from the melt on the mantle surfaces of the rotating rotors. The mineral fibres are guided from the fiberising apparatus to a collecting member by means of gas blows, and binder is fed to the mineral fibres with binder feeding devices located around the fiberising rotors before the fibres are collected onto the collecting member. Measurement values are collected from several fiberising rotors about the power used for rotating the individual rotors, whereby a ratio is calculated based on the collected measurement values, by means of which ratio the feeding of binder is controlled and/or the amount of binder to be fed is altered at least on one fiberising rotor during a fiberising process.

## Description

The invention relates to a method and an arrangement for optimising feeding of binder in a fiberising apparatus forming mineral fibres and a software product according to the preambles of the independent claims presented further below.

Mineral wool is manufactured by melting suitable mineral-rich raw materials, such as diabase, limestone or slag in a melting furnace. The obtained melt is led to a fiberising apparatus, where it is formed into mineral fibres. A cascade-type fiberiser may typically be used as a fiberising apparatus, the cascade-type fiberiser typically comprising four fiberising rotors which rotate around a horizontal or nearly horizontal axis. The axes of the fiberising rotors are typically arranged on different heights. Melt is fed to the mantle surface of the first fiberising rotor, where a part of it adheres. The rest of the melt is thrown from the first mantle surface to the mantle surface of the second fiberising rotor. Again a part of the melt gets a hold of the mantle surface of the second rotor and the rest of the melt is thrown to the mantle surface of the third rotor. A part of the melt again adheres to the third mantle surface and the rest is thrown to the fourth mantle surface, of which preferably the entire remaining melt mass gets a hold. The melt, which has got a hold of respective rotors' mantle surface, is by means of centrifugal force formed into fibres, which detach from the melt rings on the fiberising rotors. The detachment of the fibres, their trajectory after detachment and also their qualitative properties may be assisted by arranging air blows around the fiberising rotors, the force and the direction of which air blows may be used to influence the properties of the fibres. The fibres are directed from the fiberising apparatus to a collecting member, for example to an inclined conveyor or a rotating drum, arranged in front of the fiberising apparatus, in the second end of the collecting chamber. Generally, binder is also added to the fibres prior to their collection, by means of which binder individual fibres are made to attach better to the fibre web obtained later in the process.

The amount of mineral melt to be fed to the fiberising apparatus may vary during the fiberising process. In practice this means that the amount of melt exiting from the melting furnace does not remain strictly constant, but variations occur in the amount of melt to be fed to the fiberiser. This phenomenon has sometimes been described with the saying "the furnace pumps". When the amount of fed mineral melt varies, the amount of produced mineral fibres also begins to vary. If the amount of melt to be fed decreases, the amount of fibres formed in the fiberising apparatus also decreases, and when the amount of melt to be fed increases, the amount of formed fibres increases correspondingly. The changes occurring in the amount of formed fibres usually concentrate on the last, typically fourth, fiberising rotor of the fiberising apparatus. In a normal process situation the mantle surfaces of the first three fiberising rotors are saturated or almost saturated with melt, whereby small changes occurring in the feed amount of melt do not necessarily cause great changes in the amount of melt on these rotors and in the amount of fibres formed at them. For example, when the amount of melt to be fed increases, the amount of melt on the first three rotors thus does not essentially increase, but the increase occurs on the subsequent last fourth rotor.

If variation occurs in the amount of fibres formed on the fiberising rotor, the amount of binder to be fed to the fibres should be altered in a corresponding way. If the amount of formed fibres increases, but the amount of binder remains the same, a situation easily arises, where the amount of fed binder is too low, and binder lean areas, so-called "grey wool", are formed in the collected fibre web. On the other hand, if the amount of fibres decreases and the amount of binder remains the same, too much binder is fed to the fibres, which naturally increases production costs for the produced amount of fibre. The aim has thus been to adjust the amount of binder to be fed to suit each production situation. In practice this has been done manually based on a visual assessment of the produced fibre web, which has resulted in that possible fluctuation in the fiberising process has been reacted to too slowly.

One object of the present invention is to reduce or even completely eliminate the above-mentioned problems appearing in the prior art.

One object of the present invention is to provide an arrangement and a method, by means of which the control and optimisation of the feeding of binder in a fiberising process may be improved significantly.

Another object of the present invention is to provide an arrangement and a method, by means of which the feeding of binder is easy to control in real-time or almost in real-time.

The above-mentioned disadvantages are eliminated or reduced, and the above-mentioned objects are attained with the present invention, which is characterised in what is defined in the characterising parts of the independent claims presented further below.

Some preferred embodiments according to the invention are disclosed in the dependent claims presented further below.

A typical method according to the invention for optimising feeding of binder in a fiberising apparatus forming mineral fibres comprises
- feeding mineral melt to a fiberising apparatus, which comprises several fiberising rotors forming mineral fibres and rotating around a horizontal or nearly horizontal axis,
- forming mineral fibres from the melt on the mantle surfaces of the rotating rotors,
- guiding mineral fibres from the fiberising apparatus to a collecting member by means of gas blows,
- feeding binder to the fibres with binder feeding devices located around the fiberising rotors before collecting the fibres on the collecting member,
- collecting measurement values from several fiberising rotors about the power used for rotating individual rotors, and
- calculating, based on the collected measurement values, a ratio, by means of which the feeding of binder is controlled and/or the amount of binder to be fed is altered at least on one fiberising rotor during fiberising process.
   A typical arrangement according to the invention for optimising feeding of binder in a fiberising apparatus forming mineral fibres comprises
- a fiberising apparatus, which has several, preferably four, fiberising rotors rotating around a horizontal or nearly horizontal axis,
- blow-off devices, which are arranged to encircle active mantle surfaces of the fiberising rotors of the fiberising apparatus and which are arranged in the immediate vicinity of the active mantle surfaces for blowing fibres from the mantle surfaces towards a collecting member, which is arranged at a distance from the fiberising apparatus,
- binder feeding devices, which are arranged to encircle the active mantle surfaces of the fiberising rotors of the fiberising apparatus, and with which binder is sprayed onto the formed mineral fibres,
- monitoring devices, which are arranged to monitor the power consumed by the fiberising rotors during the fiberising process and to collect measurement values describing the power consumption, and
   a control unit, which is arranged to calculate a ratio, by means of which the binder feeding devices are controlled and/or the adjustment means for adjusting the amount of the binder to be fed are adjusted on at least one fiberising rotor based on the ratio calculated during the fiberising process.

A typical software product according to the invention is arranged to perform the steps of the method according to the invention.

Now it has surprisingly been discovered that the amount of binder fed to the fiberising rotors may be controlled more precisely and the amount of binder to be fed can also be altered significantly faster as the fiberising conditions change when measurement values are collected from the fiberising rotors about the power required for rotating the individual rotors, and a ratio is calculated by using these measurement values, by means of which ratio an understanding is obtained about how the mineral melt is divided in the fiberising apparatus. By using the ratio the amount of binder to be fed may be altered simply and fast when the amount of melt changes on the surface of the fiberising rotor during the fiberising process. The power required by the fiberising rotor is directly or at least almost directly proportional to the amount of melt on the rotor. When the ratio, which has been calculated based on the powers required by the fiberising rotors, for a certain fiberising rotor increases or decreases, it means that the amount of melt on the mantle surface of the rotor in question and usually also the amount of fibres formed on the rotor in question has changed at a corresponding proportion compared to the amount of melt and the amount of fibres formed on the mantle surfaces of other rotors. According to the invention the amount of binder to be fed may thus be altered on the fiberising rotor in question using the same ratio, whereby it is ensured that too much or too little binder is not fed on the rotor in question in relation to the amount of formed fibres. Thus an optimal amount of binder to be fed may be ensured also during quickly changing fiberising conditions.

Typically mineral melt is thus fed to the mantle surface of the first rotor of the fiberising apparatus, wherefrom the mineral melt is thrown to the mantle surface of the second rotor, and thence onwards to the mantle surface of a possible subsequent rotor, whereby mineral fibres are formed on the active mantle surfaces of the rotors. The fiberising apparatus generally comprises at least two, typically three or more, most typically four, fiberising rotors rotating around a horizontal or nearly horizontal axis.

In one embodiment of the invention from the fiberising rotors are collected measurement values, which describe the power consumption of the motors rotating the individual fiberising rotors. The measurement values describing the motor power are simply and easily obtained directly from the frequency transformer of the motor. In another embodiment monitoring devices are arranged in connection with motors rotating the individual fiberising rotors, which monitoring devices are arranged to collect measurement values describing the power consumption of the motors rotating the individual fiberising rotors.

In one embodiment of the invention one or more of the fiberising rotors is provided with magnetic bearings, as has been described for example in publication WO 90/15032, which is in its entirety incorporated by reference in this application. Sometimes all the fiberising rotors in the fiberising apparatus may be provided with magnetic bearings. Monitoring devices may also be arranged in connection with the magnetic bearings. The monitoring devices may be arranged to collect from the fiberising rotors measurement values describing the power consumption of the magnetic bearings of individual fiberising rotors. Typically the voltage used by the magnetic bearing is constant, whereby a change in the current required by the magnetic bearing is proportional to a change in the power consumption of the magnetic bearing. The change in the power may thus be monitored by monitoring the change in the current amount consumed by the magnetic bearing of an individual rotor.

It is apparent that an optional number of the motors or magnetic bearings of the rotors of the fiberising apparatus may be monitored with monitoring devices and measurement values describing the power may be collected from them. Preferably two, three or four rotors, most preferably each of the rotors of the fiberising apparatus, are monitored in the invention, and measurement values are collected from a corresponding number of rotors, which values are used to calculate the ratio. If the power consumed or required by each of the rotors of the fiberising apparatus is monitored, an extensive understanding of the fiberising process is obtained, which makes the control and optimisation of the binder feeding significantly easier.

In one preferred embodiment of the invention measurement values are thus collected from each fiberising rotor. The obtained measurement values are added together to obtain a total value Pₜₒₜ, and the feeding of binder at the last fiberising rotor of the fiberising apparatus is controlled and/or altered by means of a ratio Pₗₐₛₜ/Pₜₒₜ, where Pₗₐₛₜ is the measurement value obtained from the last fiberising rotor. Thus it is possible to concentrate especially on the changes occurring at the last fiberising rotor of the fiberising apparatus, because the changes occurring in the amount of melt to be fed to the fiberising apparatus usually cause most changes at the last rotor of the fiberising apparatus. Thus a situation may be avoided, where for example pulse-like changes occurring in the feeding of mineral melt cause pulse-like changes in the amount of formed fibres at the last fiberising rotor while the feeding of binder remains constant, whereby the result has previously been a binder lean fibre web. Now the feeding of binder may be changed quickly by using the calculated ratio, and a sufficient feed amount of binder may be ensured also during pulse-like changes.

An own individual ratio may be calculated for each fiberising rotor of the fiberising apparatus, by means of which ratio the amount of binder to be fed to the rotor in question is controlled and/or altered. Thus measurement values describing the amount of power required for rotating the fiberising rotor are collected from each fiberising rotor, the obtained measurement values are added together to obtain a value Pₜₒₜ, and the feeding of binder at all the fiberising rotors of the fiberising apparatus is controlled and/or altered independently by means of a ratio Pᵣₒₜₒᵣ/Pₜₒₜ calculated for each fiberising rotor, where Pᵣₒₜₒᵣ is the measurement value obtained from each fiberising rotor. This makes possible an even more precise consideration of changes in the internal fiberising conditions of the fiberising apparatus in the feeding of binder, whereby unnecessary overfeeding of binder, which occurs in order to be on the safe side, is avoided.

An arrangement according to the invention preferably comprises automatic calculation means, by means of which a ratio is calculated from the information describing the power consumption of the fiberising rotor collected from the fiberising rotors, which ratio may be used for controlling and/or optimising the feeding of binder. The calculation means may comprise mathematical methods and automated systems known as such to a person skilled in the art.

According to one preferred embodiment of the invention measurement values are continuously collected from the rotors, whereby the control devices and persons controlling the process have access at all times to real-time information about the amount and/or distribution of melt in the fiberising apparatus and about changes occurring in the amount and/or distribution of the melt. Measurement values may also be collected at certain predetermined intervals, as long as it is made sure that the collection interval of the measurement values does not become too large.

The measurement values collected from the fiberising rotors may be filtered with a filtering unit, which is arranged to filter the measurement values collected with the monitoring devices before they are transmitted to the adjustment means. The filtering may be performed by removing from the obtained measurement values sudden peak-like fluctuations, which exceed certain predetermined filtering limit values. The filtering unit may also comprise means, by means of which an average is calculated from the measurement values obtained within a certain time frame, which average is then used for calculating a ratio. The filtering unit may also use other different filtering techniques, which are as such known for a person skilled in the art.

A largest allowed deviation for the ratio calculated by means of the collected measurement values may be determined for each rotor of the fiberising apparatus. When the deviation exceeds this predetermined deviation limit value, the amount of binder to be fed at the fiberising rotor in question is altered based on the calculated ratio.

The fibres formed on the fiberising rotors are typically blown from the active mantle surfaces of the rotors of the fiberising apparatus towards a collecting member, which is arranged at a distance from the fiberising apparatus, and blow-off devices are used for the blowing, which blow-off devices are arranged to encircle the active mantle surfaces of the rotors of the fiberising apparatus and which are arranged in the immediate vicinity of the active mantle surfaces. An active mantle surface here means that part of the surface of the fiberising rotor, where mineral fibres are formed from the melt.

Binder is typically fed to the formed fibres with binder devices, which are arranged in the immediate vicinity of the blow-off devices arranged around the fiberising rotor of the fiberising apparatus. This means that the binder devices are arranged very close to the blow-off devices, even attached to the blow-off devices. The binder devices generally form a ring of binder devices on the outside of the blow-off devices, i.e. on the side which is away from the fiberising rotors, the distance of which ring from the blow-off devices is 0-10 cm, typically 1-7 cm, more typically 2-5 cm. In one embodiment of the invention the binder devices may have been arranged in the centre of the fiberising rotors, on the side of them which is towards the collecting chamber. Binder may also be added both from the binder devices encircling the mantle surfaces of the fiberising rotors and from the centre of the fiberising rotors.

The fiberising apparatus, blow-off devices, binder devices and addition devices for optional recycled ready-made fibres may, if desired, be integrated to form a uniform mobile unit. This unit thus comprises a fiberising apparatus, where the individual fiberising rotors have been attached to each other in an appropriate manner, so that the air flows around the rotors and preferably also between them can be arranged to be as streamlined as possible. Blow-off devices may be attached to protective casings surrounding the individual fiberising rotors. The blow-off devices may comprise either a number of individual blow nozzles, which form a nozzle ring around the active mantle surfaces of the fiberising rotors, or the blow-off devices may have been arranged as blowing gaps encircling the active mantle surfaces of the fiberising rotors. These blowing gaps may have been divided by means of partition walls into several separate blow openings. Binder devices may be attached in the immediate vicinity of the blow-off device, which binder devices normally comprise a number of separate nozzles. When the blow-off devices comprise separate blow nozzles, the binder nozzles may be arranged in the same ring with the blow nozzles, for example so that every third nozzle in the rotor is a binder nozzle, while the rest are blow nozzles. When the blow-off devices are blowing gaps, the binder devices may be arranged on the outer surface of the blowing gaps, i.e. on the side of them which is away from the fiberising rotors. Generally when the above-mentioned devices are arranged to form a uniform mobile unit, wheels or the like are arranged underneath this unit, whereby the moving of the unit, for example during maintenance, is easy and light.

Sometimes disturbances may occur in the detachment of the mineral melt from the surface of the fiberising rotor, whereby for example too much mineral melt remains on the surface of the rotor. This causes a deterioration in the quality of the formed fibres and/or a reduction in the amount of formed fibres. This can be observed as a change in the power required for rotating the rotor, which also changes the ratio calculated by means of the measurement values collected from the fiberising rotors. Other parameters of the fiberising rotor may, if needed, also be controlled or altered by means of the calculated ratio, such as the rotational speed of the rotor or the volume or speed of the air blows from the blow-off devices encircling the rotor. If it is established based on a change in the ratio that disturbances occur in the detachment of the mineral melt from the surface of the rotor, the volume or speed of the air blows produced by the blow-off devices encircling said rotor may be increased in order to remedy the situation. The rotational speed of the rotor may also be altered, either at the same time or as a separate procedure.

In one embodiment of the invention the pressure in a binder feeding tube leading to an individual fiberising rotor is measured with measurement means during the fiberising process, and the state of the binder devices is monitored by means of the obtained pressure values. Sometimes a part of the nozzles of the binder devices may become clogged during the fiberising process, whereby the feeding of binder onto the formed fibres does not occur evenly. When a nozzle becomes clogged, the pressure in the binder feeding tube increases. By measuring the increase in the pressure, an understanding is obtained about the condition of the nozzles of the binder devices and possibly of the number of clogged nozzles. When the pressure in the binder feeding tube has increased above a predetermined limit value the fiberising process may be interrupted, and the clogged nozzles may be cleaned.

According to one embodiment of the invention the arrangement comprises a memory unit for storing the measurement values collected with the monitoring devices.

It is apparent for a person skilled in the art that the invention is not limited exclusively to the examples presented above, but that the invention may vary within the scope of the claims presented below.

## Claims

1. A method for optimising feeding of binder in a fiberising apparatus forming mineral fibres, which method comprises
- feeding mineral melt to a fiberising apparatus, which comprises several fiberising rotors forming mineral fibres and rotating around a horizontal or nearly horizontal axis,
- forming mineral fibres from the melt on the mantle surfaces of the rotating rotors,
- guiding mineral fibres from the fiberising apparatus to a collecting member by means of gas blows,
- feeding binder to the fibres with binder feeding devices located around the fiberising rotors before collecting the fibres onto the collecting member,
- collecting measurement values from more than one fiberising rotor about power used for rotating individual rotors,
**characterised in**
calculating, based on the collected measurement values, a ratio, by means of which the feeding of binder is controlled and/or the amount of binder to be fed is altered at least on one fiberising rotor during fiberising process.

2. The method according to claim 1, **characterised in** collecting from the fiberising rotors measurement values, which describe the power consumption of motors rotating individual fiberising rotors.

3. The method according to claim 1, **characterised in** providing the fiberising rotors with magnetic bearings, and collecting from the fiberising rotors measurement values, which describe the power consumption of the magnetic bearings of individual fiberising rotors.

4. The method according to any of claims 1-3, **characterised in** collecting measurement values from each fiberising rotor, adding the obtained measurement values together to obtain a value Pₜₒₜ, and controlling and/or altering feeding of binder at the last fiberising rotor of the fiberising apparatus by using a ratio Pₗₐₛₜ/Pₜₒₜ, where Pₗₐₛₜ is the measurement value obtained from the last fiberising rotor.

5. The method according to any of claims 1-3, **characterised in** collecting measurement values from each fiberising rotor, adding the obtained measurement values together to obtain a value Pₜₒₜ, and controlling and/or altering the feeding of binder at all the fiberising rotors of the fiberising apparatus independently by using a ratio Pᵣₒₜₒᵣ/Pₜₒₜ calculated for each fiberising rotor, where Pᵣₒₜₒᵣ is the measurement value obtained from each fiberising rotor.

6. The method according to any of the preceding claims, **characterised in** collecting measurement values continuously from the rotors.

7. The method according to any of the preceding claims, **characterised in** measuring during fiberising process pressure in a binder feeding tube leading to an individual fiberising rotor, and controlling the state of the binder feeding devices by means of the obtained pressure values.

8. An arrangement for optimising feeding of binder in a fiberising apparatus forming mineral fibres, which arrangement comprises
- a fiberising apparatus, which has several, preferably four, fiberising rotors rotating around a horizontal or nearly horizontal axis,
- blow-off devices, which are arranged to encircle active mantle surfaces of the fiberising rotors of the fiberising apparatus and which are arranged in the immediate vicinity of the active mantle surfaces for blowing fibres from the mantle surfaces towards a collecting member, which is arranged at a distance from the fiberising apparatus,
- binder feeding devices, which are arranged to encircle the active mantle surfaces of the fiberising rotors of the fiberising apparatus, and with which binder is sprayed onto the formed mineral fibres,
- monitoring devices, which are arranged to monitor power consumed by the fiberising rotors during the fiberising process and to collect measurement values describing the power consumption,
**characterised in that** the arrangement comprises a control unit, which is arranged to calculate a ratio, by means of which the binder feeding devices are controlled and/or the adjustment means for adjusting the amount of the binder to be fed are adjusted on at least one fiberising rotor based on the ratio calculated during the fiberising process.

9. The arrangement according to claim 8, **characterised in that** monitoring devices are arranged in connection with motors rotating individual fiberising rotors, which monitoring devices are arranged to collect measurement values, which describe the power consumption of the motors rotating individual fiberising rotors.

10. The arrangement according to claim 8, **characterised in that** the fiberising rotors are provided with magnetic bearings, in connection with which are arranged monitoring devices, which are arranged to collect from the fiberising rotors measurement values describing the power consumption of the magnetic bearings of the individual fiberising rotors.

11. The arrangement according to any of the claims 8-10, **characterised in that** it comprises a memory unit for storing the measurement values collected with the monitoring devices.

12. The arrangement according to any of the claims 8-11, **characterised in that** it comprises a filtering unit, which is arranged to filter the measurement values collected with the monitoring devices before they are transmitted to the adjustment means.

13. The arrangement according to any of the preceding claims, **characterised in that** it comprises calculation means, by means of which the measurement values obtained from each fiberising rotor are added together to obtain a value Pₜₒₜ, and to calculate a ratio Pₗₐₛₜ/Pₜₒₜ, where Pₗₐₛₜ is the measurement value obtained from the last fiberising rotor.

14. The arrangement according to any of the preceding claims, **characterised in that** it comprises calculation means, by means of which the measurement values obtained from each fiberising rotor are added together to obtain a value Pₜₒₜ, and to calculate ratio Pᵣₒₜₒᵣ/Pₜₒₜ for each rotor, where Pᵣₒₜₒᵣ is the measurement value obtained from each individual fiberising rotor.

15. The arrangement according to any of the preceding claims, **characterised in that** it comprises measurement means for measuring the pressure in a binder feeding tube leading to an individual fiberising rotor during the fiberising process.

16. A software product, which is arranged to perform the steps of any of method claims 1-7.
